# EUROPÄISCHE PATENTANMELDUNG

(11) **EP 2 769 767 A2**
(43) Veröffentlichungstag der Anmeldung: **27.08.2014**
(21) Anmeldenummer: 14401023.8
(22) Anmeldetag: 18.02.2014
(51) Int. Cl.: B01L 3/00

(54) **Nicht-planarer Formkörper, Verfahren zu seiner Herstellung, seine Verwendung, Verfahren zur Herstellung eines Mikrogerüsts und dessen Verwendung**

(30) Priorität: 22.02.2013 DE 102013101752
(71) Anmelder: Karlsruher Institut für Technologie, 76131 Karlsruhe (DE)
(72) Erfinder: Truckenmüller, Roman, 74223 Flein (DE); Giselbrecht, Stefan, 76187 Karlsruhe (DE); Nikolov, Pavel, 76131 Karlsruhe (DE); Cihova, Martina, 76137 Karlsruhe (DE)

(57) **Zusammenfassung**

Die vorliegende Erfindung betrifft einen nicht-planaren Formkörper (31) aus dem Bereich der Mikrofluidik, in dem mindestens eine Hohlstruktur eingebracht ist, ein Verfahren zu seiner Herstellung, seine Verwendung, ein Verfahren zur Herstellung eines Mikrogerüsts durch nachträgliche Auflösung des nicht-planaren Formkörpers und dessen Verwendung.

Der erfindungsgemäße nicht-planare Formkörper weist einen geformten Verbund (31) mit darin sich befindenden Hohlstrukturen (111, 112, 113) aus einer ersten Folie (12), in die mindestens eine Kavität eingebracht ist, und mindestens einer zweiten Folie (21) auf, die die mindestens eine Kavität in der ersten Folie (12) derart abdeckt, dass dadurch die Hohlstrukturen (111, 112, 113) ausgebildet sind.

Zur Herstellung des nicht-planaren Formkörpers wird eine zweite Folie (20) mit einer ersten mit Kavitäten versehenen Folie (11) verbunden. Der Verbund (30) wird thermisch so geformt, dass eingebettete Hohlstrukturen (111, 112, 113) in Form von Mikrokanälen entstehen. Diese werden mit einem Fluid befüllt.

Die vorliegende Erfindung ermöglicht es, mittels weitverbreitenden Strukturierungsverfahren echte dreidimensionale (nicht-planare) mikrofluidische Formkörper mit Mikrokanälen herzustellen und zwar auf der Grundlage folienbasierter Strukturen, die eine exakte fluidische Adressierung im dreidimensionalen Raum zulassen.

## Beschreibung

Die vorliegende Erfindung betrifft einen nicht-planaren Formkörper aus dem Bereich der Mikrofluidik, in dem mindestens eine Hohlstruktur eingebracht ist, ein Verfahren zu seiner Herstellung, seine Verwendung, ein Verfahren zur Herstellung eines Mikrogerüsts durch nachträgliche Auflösung des nicht-planaren Formkörpers und dessen Verwendung.

### Stand der Technik

### Technisches Gebiet

Die Mikrofluidik ist ein wachsendes, dynamisches Forschungsgebiet, weil die Integration mikrofluidischer Strukturen, beispielsweise Kanäle oder Reservoire, in Mikrosysteme für viele technische Anwendungsgebiete interessant ist. Zu diesen Anwendungsgebieten gehören laut Whitesides [3] insbesondere die analytische Chemie, die molekulare Biologie und die Mikroeletronik. Die Anfang der 1990er Jahre ursprünglich für eine hochparallelisierte chemische Analyse entwickelten mikrofluidischen Chips (Kapillarelektrophorese im Chipformat, [1, 2]) fanden schnell in modifizierter Form Anwendungsmöglichkeiten in anderen Wissenschaftsdisziplinen, wie z.B. der Molekularbiologie, und auch in der Industrie. Insbesondere die grundlegenden Arbeiten um Whitesides (z.B. Soft Lithographie, [3, 4]) beschleunigten diese Entwicklungen maßgeblich, da hier einfache und schnelle Methoden entwickelt wurden, die auch in nicht spezialisierten Labors eingesetzt werden konnten, um mikro- und nanofluidische Chips und Strukturen herzustellen, die sich insbesondere für biomedizinische Anwendungen eignen.

### Beschreibung

Innerhalb weniger Jahre wurde hier ein sehr breites Methodenspektrum entwickelt. Bis heute ist die Komplexität und Integration dieser mikro- und nanofluidischen Bauteile kontinuierlich gesteigert worden [5, 6]. Dabei beschränkte sich die Entwicklung jedoch maßgeblich auf planare Substrate, da diese für eine entsprechende Strukturierung mit etablierten Methoden, wie beispielsweise der Lithografie, erforderlich ist.

Im Zuge der fortschreitenden Entwicklung von zweidimensionalen (2D) zu dreidimensionalen (3D) Systemen über nahezu alle Disziplinen hinaus, beispielsweise in der Elektronik, der bildgebenden Analytik bzw. Mikroskopie, der biomedizinischen Forschung (3D Zellkultur, Tissue Engineering, etc.) wurden jedoch immer wieder neue Ansätze gesucht, um eine komplexe dreidimensionale Mikro- bzw. Nanofluidik zu ermöglichen. Dabei beschränkten sich die Ansätze jedoch im Wesentlichen auf die Stapelung und die vertikale Verknüpfung von Kanalsystemen um eine höhere Integrationsdichte oder eine gesteigerte Funktionalität zu erreichen [7]. Dieser Ansatz bedingt aber für die meisten Anwendungen eine maßgebliche Einschränkung, da die Kanäle in einem kompakten Stapel mehrerer Lagen vergraben sind und für verschiedene Anwendungen keinen entscheidenden Vorteil bringen, da sie nicht beliebig dreidimensional adressierbar bzw. zugänglich sind.

Direktschreibende Verfahren (Rapid Prototyping Verfahren) besitzen zwar diesen Nachteil nicht, da hier freistehende, dünnwandige Kanäle in nahezu beliebiger Konformation hergestellt werden können [8], allerdings handelt es sich dabei um serielle, schreibende Verfahren die eine Produktion in größeren Stückzahlen bei vergleichender Präzision und Strukturgröße nicht ermöglichen und daher insbesondere für industrielle Zwecke nur bedingt oder völlig ungeeignet sind. Die derzeit erreichbare Auflösung beim Schreiben bringt darüber hinaus eine vergleichsweise hohe Oberflächenrauigkeit mit sich.

Mit dem Beginn der Nutzung von folienbasierten Mikrostrukturen [9, 10] und ihre seitdem andauernde Entwicklung, ergaben sich gänzlich neue Möglichkeiten mikro- und nanofluidische Strukturen in ein dreidimensionales Mikrosystem zu implementieren, ohne dabei auf die mächtigen und weitverbreiteten Strukturierungsmethoden wie Lithografie, Nanoprägen, Mikrospritzguss etc. verzichten zu müssen.

Aus DE 10 2007 050 976 B4 ist ein Verfahren zur Umformung einer einzigen Folie bekannt, bei dem eine umzuformende Folie aus einem Kunststoff oder einem Gemisch aus Kunststoffen einem Thermoformverfahren unterzogen wird.

### Aufgabenstellung

Ausgehend hiervon besteht die Aufgabe darin, die Einschränkungen und Nachteile des Standes der Technik zu überwinden.

Mit der vorliegenden Erfindung soll es möglich sein, echte dreidimensionale (nicht-planare) mikrofluidische Formkörper mit Mikrokanälen herzustellen und zwar auf der Grundlage folienbasierter Strukturen, die eine exakte fluidische Adressierung im dreidimensionalen Raum ermöglichen.

Insbesondere soll das erfindungsgemäße Verfahren eine einfache und robuste Alternative zu herkömmlichen Verfahren darstellen, die durch Stapeln und Verbinden von planaren mikrostrukturierten Bauteilen vergleichsweise dickwandige oder in Bulkmaterial vergrabene Mikrokanalsysteme ergeben.

### Lösung

Diese Aufgabe wird im Hinblick auf den nicht-planaren Formkörper durch die Merkmale des *Anspruchs 1,* im Hinblick auf das Verfahren zur Herstellung des nicht-planaren Formkörpers durch die Verfahrensschritte des *Anspruchs 6* und im Hinblick auf die Verwendung durch den *Anspruch 12* gelöst. Die Unteransprüche beschreiben jeweils vorteilhafte Ausgestaltungen der Erfindung.

### Detaillierte Beschreibung

Die vorliegende Erfindung befasst sich mit einem nicht-planaren Formkörper (dreidimensionale Mikrostruktur), in der Hohlstrukturen eingebettet sind. Dieser Formkörper ist ein geformter Verbund aus zwei Kompositfolien, wobei die erste Folie eine Dicke von 0,1 bis 1000 µm, bevorzugt von 10 µm bis 500 µm, besonders bevorzugt von 20 µm bis 100 µm, und mindestens eine Kavität aufweist und die mindestens eine zweite Folie die mit mindestens einer Kavität versehene Seite bzw. versehenen Seiten der ersten Folie bedeckt. Die Kavitäten in der ersten Folie werden somit durch die erste Folie und die hierauf aufgebrachte Seite der mindestens einen zweiten Folie umschlossen und bilden dabei Hohlstrukturen insbesondere in Form von Kanälen aus. Diese Kanäle sind:
- entweder miteinander verbunden, indem sie ineinander einmünden und/oder sich kreuzen oder
- sie sind voneinander isoliert und berühren sich dementsprechend nicht.

In einer bevorzugten Ausgestaltung finden sich beide Konfigurationen der Kanäle in ein und demselben Formkörper wieder.

Die erste Folie wird vorzugsweise mittels mechanischer oder chemischer Mikro- oder Nanostrukturierung insbesondere durch Laser oder mittels Bestrahlung oder einer Kombination dieser Verfahren insbesondere Lithografie mit mindestens einer Kavität versehen.

Eine *Kavität* wird als eine Vertiefung oder Grabenstruktur in der Folie definiert, die eine offene Seite besitzt, wohingegen eine *Hohlstruktur* eine leere von allen Seiten vom Folienmaterial umgebene Aushöhlung beschreibt, welche in einer Ausgestaltung über eine Einlass und/oder Auslassöffnung verfügt. Die eingebrachten Kavitäten weisen insbesondere eine Tiefe von 1 nm bis inklusive zur Dicke der ersten Folie, bevorzugt von ≥ 10 nm, besonders bevorzugt von ≥ 100 nm, auf.

Unter *nicht-planarwird* eine drei-dimensionale Geometrie des Formkörpers verstanden, wobei der Formkörper diese Geometrie nicht nach der Stapelung einer oder mehreren Schichten auf einem planaren Substrat erhält, sondern es handelt sich um eine echte 3D-Konformation, wo die Schicht von unten oder oben gesehen keine zweidimensionale Ebene bildet.

Vorzugsweise bestehen die umzuformenden Folien aus einem Polymer oder einem Gemisch aus Polymeren, wobei als Polymer insbesondere ein Thermoplast, ein thermoplastischer Elastomer oder ein Thermoelast eingesetzt wird. Die Folie selbst liegt in einer besonderen Ausgestaltung als Kompositfolie vor und/oder ist mit Verstärkungs- oder Füllstoffen gefüllt und/oder liegt als mehrlagige Folie (Multischicht) vor.

Die *Kompositfolien* zeichnen sich dadurch aus, dass sie vor dem Deckeln und Formen einen Verbundswerkstoff umfassen, und zwar eine organische, polymere Matrix mit einer anorganischen, metallischen, metalloxidischen oder keramischen Partikel- oder Faserfüllung. Ein in der Kompositfolie enthaltener polymerer Binder wird nach dem Deckeln und Formen, bevorzugt thermolytisch oder pyrolytisch, ausgebrannt, wodurch das anorganische Material in eine 3D Komformation gesintert wird.

Die mindestens eine zweite Folie oder die erste Folie oder beide Folien sind zumindest, teilweise, d.h. lokal, oder ganz porös, oder werden teilweise oder ganz porös gemacht, zum Beispiel durch Ionenspurtechnologie, Phasenseparation oder Salt Particulate Leaching. Die Poren besitzen insbesondere eine kegelförmige oder zylindrische Geometrie.

Die vorliegende Erfindung betrifft weiterhin ein Verfahren zur Herstellung eines nicht-planaren Formkörpers. Zur Durchführung des erfindungsgemäßen Herstellungsverfahrens wird in einem ersten Verfahrenschritt a) eine erste Folie bereitgestellt, die eine Dicke von 0,1 µm bis 1000 µm, bevorzugt von 10 µm bis 500 µm, besonders bevorzugt von 20 µm bis 100 µm, aufweist. In einem zweiten Verfahrensschritt wird eine zweite Folie auf die erste Folie gelegt oder gefügt und zwar auf die mit Kavitäten versehene Seite. Die beiden Folien werden vorzugsweise durch Auflaminierung oder thermisches Verschweißen fest miteinander verbunden. Das Aufbringen der zweiten Folie auf die erste Folie erfolgt entweder vor, während oder nach dem Thermoformen. Die Kavitäten werden derart gedeckelt, dass sie sich in ihrer Geometrie nicht wesentlich verändern und unbeschädigt bleiben.

Das Thermoformen oder die Thermoformung erfolgt vor, während oder nach diesem Verfahrensschritt. Darunter wird ein Verfahren zur Umformung der Folien verstanden, aus der ein nicht-planarer Formkörper gebildet wird. Diese thermische Verformung erfolgt bei Temperaturen, die eine ausreichende Verformbarkeit der Folien mit sich bringen und möglichst keine bedeutende Verformung oder kein Kollabieren der Kanäle bewirkt. Dies geschieht bei einer Temperatur, die zwischen 0,1 °C und 30 °C, bevorzugt zwischen 1 °C und 20 °C, besonders bevorzugt zwischen 5 °C und 15 °C, über der Glasübergangstemperatur des in den Folien enthaltenen thermoplastischen Kunststoffs liegt. In einer weiteren Ausgestaltung liegt die Temperatur für die Thermoformung unter der Temperatur, die zur Herstellung der Kavitäten in der ersten Folie dient und zwar wenn die Kavitäten mittels Prägen hergestellt wurden.

In einer weiteren Ausgestaltung werden die mit Kavitäten versehene erste Folie und/oder die zweite Folie zumindest teilweise oder ganz mittels Bestrahlung, insbesondere UV-Belichtung, zusätzlicher Beschichtungen oder plasmabasierter Verfahren vorbehandelt, um die Benetzbarkeit und Rauigkeit der Oberflächen zu kontrollieren und einzustellen.

In die somit erhaltene geformte Formstruktur werden bevorzugt Kapillarschläuche eingefügt und zwar insbesondere an jedem Einlass- und Auslassbereich eines Mikrokanals und vorzugsweise dicht verklebt. Nach dem Verbinden mit Fluidreservoirs und Pumpen, werden die Mikrokanäle mit temporär oder dauerhaft gasförmigen, flüssigen oder festen Medien befüllt.

In einer besonderen Ausgestaltung umfasst das Fluid eine niedrigviskose und UVvernetzbare Lösung, die anschließend durch UV-Bestrahlung ausgehärtet wird und die thermogeformte Struktur durch diese Armierung eine lokal erhöhte mechanische Festigkeit erhält.

In einer weiteren Ausgestaltung umfasst das Fluid eine elektro-, chemoluminiszierende oder phosphoriszierende Flüssigkeit.

In einer weiteren Ausgestaltung umfasst das Fluid eine erwärmte, wässrige Lösung, um die Flüssigkeit innerhalb der thermogeformten Mikrostruktur lokal begrenzt zu erwärmen oder zu kühlen.

In einer weiteren Ausgestaltung umfasst das Fluid eine wässrige Lösung, die dann aus den Mikrokanälen durch die Poren in der Deckelfolie falls vorhanden austritt. Ein dosiertes Eintreten der Flüssigkeit durch die Poren der dünnwandigen Deckelfolie ermöglicht eine präzise lokale Adressierung in die thermogeformten, flüssigkeitsgefüllten Mikrokanäle. Der somit erzeugte Gradient eignet sich für biologische Anwendungen bei Zellkulturträgern oder für ein krontrolliertes Kristallwachstum in den thermogeformten Strukturen.

Der nicht-planare Formkörper findet Anwendung im Bereich der Mikrofluidik insbesondere als 3D oder organische mikrofluidische Folien und Folienchips oder als 3D Tissue Engineering-Substrate mit Reservoirs oder Depots für bioaktive Moleküle. Diese Strukturen dienen dann als mikrofluidische Zellkulturträger, in denen biologisches Gewebe durch die Kultivierung von Zellen künstlich hergestellt wird. Diese Strukturen eignen sich auch in Kombination mit sog. *Form, Fill and Seal* Verfahren, die in der Verpackungsindustrie angewendet werden. Auf mikrofluidischer Ebene dient der Formkörper als eine und dieselbe Struktur in der die Kavitäten sowohl geformt, gefüllt als auch anschließend versiegelt werden. Es ergeben sich ebenfalls Möglichkeiten für den Einsatz als mikrofluidische Module zur Erzeugung von räumlichen, stabilen oder dynamischen chemischen Gradienten in 3D Mikrostrukturen und für die Querfiltration. Auch im mikroverfahrenstechnischen Anwendungsbereich können die Formkörper als lokal beheizte oder gekühlte Mikrostrukturen und Mikrowärmetauscher, als 3D-Lichtwellenleiter oder zur Herstellung von Mikrogerüsten eingesetzt werden.

Der erfindungsgemäße nicht-planare Formkörper löst durch seine folienbasierte Struktur das technische Problem der dreidimensionalen Adressierung, indem die eingebetteten Mikrokanäle einzeln adressiert werden. Da sich durch das Herstellungsverfahren die Mikrokanäle in beliebiger Konformation im dreidimensionalen Raum befinden, wird eine exakte fluidische Adressierung in 3D ermöglicht. Dadurch werden Parameter wie Wärme oder Konzentration lokal gesteuert, und die erwünschten Gradienten erzeugt.

Ein besonderer Vorteil des vorliegenden Verfahrens ist, dass robuste 3D-Mikrokanalsysteme mit den weitverbreitenden Strukturierungsmethoden wie Lithografie oder Nanoprägen hergestellt werden, ohne auf deren Einschränkung auf planare Systeme Rücksicht nehmen zu müssen.

Ein besonderer Vorteil ist, dass die Hohlstrukturen die Form der ursprünglich auf die erste Folie geprägten Kavitäten behalten, weil sie während des in dieser Hinsicht schonenden Verbunds- und Thermoformverfahrens nicht kollabieren.

Ein besonderer Vorteil besteht darin, dass das Verfahren ein kontinuierlicher Prozess ist, der gegenüber den Direktschreibverfahren eine hohe Oberflächenqualität in den Kavitäten ermöglicht. Somit eignen sich die Kavitäten für High-Troughput-Screening, bei dem im Hochdurchsatz eine hohe Anzahl an biochemischer Tests durchgeführt werden. Ein besonderer Vorteil liegt in der Dünnwandigkeit und mechanischer Festigkeit der Strukturen und der damit verbundenen Flexibilität der Strukturen, die eine Strukturierung in planarem oder im 3D-thermogeformten Zustand erlaubt.

### Ausführungsbeispiele

Die Erfindung wird im Folgenden anhand von Ausführungsbeispielen und den Figuren näher erläutert. Hierbei zeigen:
- **Fig. 1**: Schematischer Ablauf des erfindungsgemäßen Verfahrens
- **Fig. 2**: Aufsicht der mit Kavitäten versehenen ersten Folie

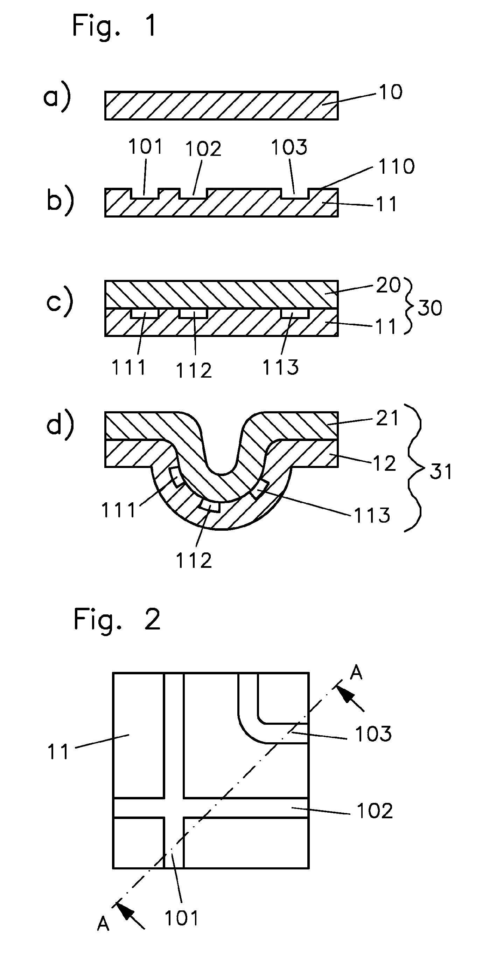

In Fig. 1 ist der Ablauf des erfindungsgemäßen Verfahrens schematisch dargestellt. Fig. 1a zeigt das Bereitstellen einer ersten Folie 10. Durch topographische Mikro- oder Nanostrukturierung werden in die erste Folie 10 Kavitäten 102, 102, 103 eingebracht, wodurch eine mit Kavitäten versehene Folie 11 erhalten wird, die in Fig. 1b dargestellt ist. In Fig. 1c ist das Verbinden der mit Kavitäten versehenen Folie 11 mit einer zweiten Folie 20 dargestellt, wodurch Hohlstrukturen 111, 112, 113 ausgebildet werden. Auch nach dem Verformen bleiben die mit Kavitäten versehene verformte erste Folie 12 und die ebenfalls verformte zweite Folie 21 in Fig. 1d im geformten Verbund 31 miteinander verbunden.

Fig. 2 zeigt die mit Kavitäten versehene Folie 11 von oben, wobei der angedeutete Querschnitt die Darstellung in Fig. 1b ergibt. Die Kavitäten 101, 102, 103 können gemäß der Fig. 2 miteinander verbunden (siehe 101 und 102) oder voneinander isoliert sein (siehe 101/102 in Bezug zu 103).

### Ausführungsbeispiel 1: Herstellung einer mechanisch festen thermogeformten Struktur

Zur Durchführung des erfindungsgemäßen Verfahrens wurde eine 50 µm dicke Polycarbonat-Folie als erste Folie 10 mittels eines strukturierten Si-Stempels bei einer Temperatur von ca. 180 °C und eines Prägedrucks von ca. 5 MPa geprägt. Die somit erhaltenen Kavitäten 101, 102, 103 besaßen eine Tiefe von 3 µm und eine Breite von 4 µm. Eine zweite Folie 20 wurde auf die mit Kavitäten versehene Seite 110 der ersten strukturierten Folie 11 gefügt, so dass die Kavitäten 101, 102, 103 gedeckelt wurden und somit Hohlstrukturen 111, 112, 113 ausgebildet wurden. Die Füge-Parameter bzw. die Temperatur von ca. 145 °C und der Druck von ca. 4 MPa wurden so gewählt, dass die Kavitäten 101, 102, 103 nicht beschädigt und in ihrer Geometrie nicht verändert wurden. Anschließend wurde das mehrlagige Folienkonstrukt 30 bei einer Temperatur von ca. 157 °C unter 2 MPa Gasdruck thermisch geformt und der geformte Verbund 31 entnommen.

Danach wurden sowohl im Einlass- als auch im Auslassbereich der gebildeten Hohlstrukturen 111, 112, 113 Kapillarschläuche eingefügt und dicht verklebt, um die Kontaktierung nach außen zu ermöglichen. Die Kapillarschläuche wurden mit Flüssigreservoirs und Pumpen verbunden.

Mittels des aktiven Pumpens verlief das Befüllen der Kapillarschläuche und der Hohlstrukturen (Mikrokanälen) 111, 112, 113 mit einer niedrigviskosen und UVvernetzbaren Lösung. Die anschließende UV-Bestrahlung des geformten Verbunds 31 diente der Aushärtung der Lösung in den Mikrokanälen 111, 112, 113. Diese Armierung bewirkt lokal eine erhöhte mechanische Festigkeit des thermogeformten Verbunds 31.

### Ausführungsbeispiel 2: Herstellung einer thermogeformten Struktur mit lokal erwärmten Mikrokanälen

In diesem Ausführungsbeispiel wurde auf die in Ausführungsbeispiel 1 strukturierte Polycarbonat-Folie als erste Folie 11 eine zweite Folie 20 gelegt. Die beiden Folien wurden diesmal erst während dem Thermoformen fest verbunden. Das Thermoformen und das gleichzeitige thermische Verschweißen erfolgten in einem Temperaturbereich von etwa 155-160 °C unter einem Gasdruck von 2 MPa. Das Anbringen der Kapillarschläuche verlief wie im Ausführungsbeispiel 1, wurden aber anschließend mit einer erwärmten, wässrigen Lösung befüllt. Durch die exakte Adressierung der Mikrokanäle wird dadurch innerhalb des thermogeformten Verbunds 31 eine lokale Erwärmung der Flüssigkeit ermöglicht.

### Ausführungsbeispiel 3: Herstellung einer thermogeformten Struktur mit Gradientenerzeugung in den Mikrokanälen

In diesem Ausführungsbeispiel wurde das gleiche Verfahren genutzt wie im Ausführungsbeispiel 2 außer, dass in die erste Folie 10 mittels des Strukturierungsverfahrens Kavitäten mit einer Tiefe von 4 µm und einer Breite von 10 µm geprägt wurden. Zusätzlich wurde in dieser Ausführung die zweite Folie 20 mit Poren versehen, indem sie zunächst einer Schwerionenbestrahlung unterzogen wurde. An Stelle der daraus erzeugten Ionenspuren entstanden dann durch chemisches Ätzen der Folie Poren mit einem Durchmesser von ca. 3 µm.

Diese Poren ermöglichen nach dem Befüllen der Kapillarschläuche und der Mikrokanäle 111, 112, 113 mit einer wässrigen Lösung einen Eintritt und/oder einen Austritt und/oder einen Austausch von Flüssigkeit durch die geformte zweiten Folie 21 hindurch. In die vorzugsweise mittels der Kapillarschläuche exakt adressierbaren Hohlstrukturen (Mikrokanäle) 111, 112, 113 wird somit eine lokal kontrollierte Abgabe bzw. Zugabe von Substanzen oder Partikeln ermöglicht. Auf diese Weise wird ein Gradient dieser Substanzen oder Partikeln innerhalb und/oder unmittelbar außerhalb des geformten Verbunds 31 erzeugt.

### Literatur

[1] D. J. Harrison, A. Manz, Z. Fan, H. Lüdi, H. M. Widmer: Capillary Electrophoresis and Sample Injection Systems Integrated on a Planar Glass Chip, Anal. Chem. 1992, 64, S. 1926-1932.
[2] A. Manz, D. J. Harrison, E. M. J. Verpoorte, J. C. Fettinger, A. Paulus, H. Lüdi, H. M. Widmer: Planar chips technology for miniaturization and integration of separation techniques into monitoring systems: Capillary electrophoresis on a chip, J. Chromatogr. 1992, 593, S. 253-258.
[3] Xia Y, Whitesides GM: Soft Lithography. Angew Chem, Int Ed Engl 1998, 37(5):550-575.
[4] Whitesides GM: The origins and the future of microfluidics. Nature 2006, 442(7101):368-373.
[5] Lee C-C, Snyder TM, Quake SR: A microfluidic oligonucleotide synthesizer. Nucleic Acids Research 2010, 38(8):2514-2521.
[6] Wang J, Fan HC, Behr B, Quake SR: Genome-wide single-cell analysis of recombination activity and de novo mutation rates in human sperm. Cell 2012, 150(2):402-412.
[7] McDonald JC, Whitesides GM: Poly(dimethylsiloxane) as a Material for Fabricating Microfluidic Devices. Accounts of Chemical Research 2002, 35(7):491-499.
[8] Xia C, Fang NX: 3D microfabricated bioreactor with capillaries. Biomed Microdevices 2009, 11(6):1309-1315.
[9] Truckenmüller R, Rummler Z, Schaller T, Schomburg WK: Low-cost production of single-use polymer capillary electrophoresis structures by microthermoforming. In Proc Micromechanics Europe Workshop (MME): 2001; Cork; 2001:39-42.
[10] Truckenmüller R, Rummler Z, Schaller T, Schomburg WK: Low-cost thermoforming of micro fluidic analysis chips. J Micromech Microeng 2002, 12(4):375-379.

## Patentansprüche

1. Nicht-planarer Formkörper, aufweisend einen geformten Verbund (31) mit darin sich befindenden Hohlstrukturen (111, 112, 113) aus
- einer ersten Folie (12) mit einer Dicke von 0,1 bis 1000 µm, in die mindestens eine Kavität (101, 102, 103) eingebracht ist, und
- mindestens einer zweiten Folie (21), die die mindestens eine Kavität (101, 102, 103) in der ersten Folie (12) derart abdeckt, dass dadurch die Hohlstrukturen (111, 112, 113) ausgebildet sind.

2. Nicht-planarer Formkörper nach Anspruch 1, wobei die erste Folie (10) und/oder die mindestens zweite Folie (20) ein Material aufweist, das einen thermoplastischen Kunststoff und/oder ein thermoplastisches Elastomer und/oder ein Thermoelast enthält, und das nicht oder zumindest teilweise mit Poren versehen ist.

3. Nicht-planarer Formkörper nach Anspruch 1 oder 2, wobei die erste Folie (10) und/oder die mindestens zweite Folie (20) als mehrlagige Folie ausgestaltet sind und/oder in Form einer Kompositfolie vorliegen.

4. Nicht-planarer Formkörper nach einem der Ansprüche 1 bis 3, wobei mindestens zwei Hohlstrukturen (111, 112, 113) vorhanden sind, die miteinander verbunden oder voneinander isoliert sind.

5. Nicht-planarer Formkörper nach ein em der Ansprüche 1 bis 4, wobei die eingebrachten Kavitäten (101, 102, 103) eine Tiefe von 1 nm bis inklusive zur Dicke der ersten Folie (10), aufweisen.

6. Verfahren zur Herstellung eines nicht-planaren Formkörpers (31) mit den Verfahrensschritten
a) Bereitstellen einer ersten Folie (10),
b) Einbringen mindestens einer Kavität (101, 102, 103) in mindestens eine Seite (110) der ersten Folie (10), wodurch eine mit Kavitäten versehene Folie (11) erhalten wird,
c) Aufbringen mindestens einer zweiten Folie (20) auf die mit Kavitäten versehenen Seite (110) der Folie (11), wodurch Hohlstrukturen (111, 112, 113) ausgebildet werden,
d) Entnehmen des Formkörpers, aufweisend einen geformten Verbund (31) mit darin sich befindenden Hohlstrukturen (111, 112, 113),
wobei
e) vor, während oder nach Verfahrensschritt c) eine thermische Verformung erfolgt.

7. Verfahren nach Anspruch 6, wobei das Einbringen der mindestens einen Kavität (101, 102, 103) mittels mechanischer Strukturierung und/oder chemischer Strukturierung und/oder mittels Bestrahlung erfolgt.

8. Verfahren nach Anspruch 6 oder 7, wobei das Aufbringen einer zweiten Folie (20) mittels Auflaminierung oder Aufschweißen erfolgt.

9. Verfahren nach einem der Ansprüche 6 bis 8, wobei der Verfahrenschritt e) bei einer Temperatur durchgeführt wird, die über der Glasübergangstemperatur liegt.

10. Verfahren nach einem der Ansprüche 6 bis 9, wobei die Hohlstrukturen (111, 112, 113) zumindest teilweise mit mindestens einem Fluid gefüllt werden, das darin als Fluid verbleibt oder einer Verfestigung unterzogen wird.

11. Verfahren nach Anspruch 10, wobei das mindestens eine Fluid über Kapillarschläuche, die mit mindestens einer der Hohlstrukturen (111, 112, 113) verbunden sind, eingefüllt wird.

12. Verwendung eines nicht-planaren Formkörpers nach einem der Ansprüche 1 bis 5 als dreidimensionale Folien, Speicherbehälter, Flüssigkeitsfilter oder Gradientenerzeuger für mikrofluidische Anwendungen, als Zellkulturträger für biologische und diagnostische Anwendungen oder als Licht- oder Wärmeübertrager für mikroverfahrenstechnische Anwendungen oder zur Herstellung von Mikrogerüsten.
